# EUROPEAN PATENT APPLICATION

(11) **EP 3 012 554 A1**
(43) Date of publication of application: **27.04.2016**
(21) Application number: 14813383.8
(22) Date of filing: 17.06.2014
(51) Int. Cl.: F24J 2/34, F24J 2/46

(54) **DUAL-LAYER COOL-AND-HEAT-PURPOSE SALT-EXCLUSIVE SOLAR POND AND CROSS-SEASON ENERGY-STORING COOLING AND HEATING SYSTEM**

(30) Priority: 21.06.2013 CN 201310248847
(71) Applicant: Zhongying Changjiang International New Energy Investment Co., Ltd, Wuhan Hubei 430223 (CN)
(72) Inventor: CHEN, Yilong, Wuhan Hubei 430223 (CN); HU, Shuchuan, Wuhan Hubei 430223 (CN); ZHANG, Yanfeng, Wuhan Hubei 430223 (CN)
(74) Representative: Zeuner Summerer Stütz
(86) International application number: PCT/CN2014/080109
(87) International publication number: WO 2014/202000

(57) **Abstract**

A dual-layer cool-and-heat-purpose salt-exclusive solar pond is formed by a salt-exclusive solar pond (1) at an upper layer and an energy storing pond (2), which are separately connected to a water source. The salt-exclusive solar pond (1) comprises a pond bottom (1.1) and a pond wall (1.2). A top cover of the energy storing pond (2) is the pond bottom (1.1) of the salt-exclusive solar pond (1). A pond wall and a bottom surface of the energy storing pond (2) are a composite layer (2.1). A heat exchange coil (2.2) is disposed in the energy storing pond (2) and used for implementing heat exchange in the energy storing pond (2). The salt-exclusive solar pond (1) and the energy storing pond (2) are communicated through a valve of the pond bottom (1.1) of the salt-exclusive solar pond (1) in a controllable manner. A cross-season energy-storing cooling and heating system using a dual-layer cool-and-heat-purpose salt-exclusive solar pond comprises: at least two dual-layer cool-and-heat-purpose salt-exclusive solar ponds and a heat pump (5). When at least one dual-layer dual-purpose salt-exclusive solar pond is used for cooling, at least one dual -purpose salt-exclusive solar pond is used for heating, and vice versa. The heat pump (5) has one end connected to a circulation line in which the heat exchange coil (2.2) of each energy storing pond (2) is located and the other end connected to an external user (6). A plurality of water pumps (3.1-3.5) and valves (4.1-4.13) are disposed in a system line and separately used for providing power and working conditions of a control system to a medium in the line.

## Description

### TECHNICAL FIELD

The invention relates to a seasonal energy storage and supply technology, and more particularly to a double-layer salt-free seasonal heat-cold energy storage and supply pool, and a seasonal energy storage system capable of heating and cooling using the same.

### DESCRIPTION OF RELATED ART

In recent years, energy crisis worldwide leads to a fiercer energy war. At present, coal, petroleum, natural gas and the like regular energies are widely used. On the one hand, mineral fuels release harmful substances such as CO₂, dust, sulfide, or nitrogen oxides etc. when burning, which seriously threatens the living environment; on the other hand, the peak load and overall load of the urban power network annually increase as the city expands, causing the grid to overload.

China is rich in solar energy, with annual sunshine hours being more than 2200 hours; and the area where annual amount of solar radiation is more than 5016 MJ/m² accounts for more than two third of the country's territory. However, even the strongest solar radiation (at sunny noon in summer around the tropic of cancer) is only 1-2 kW/ m², not to mention that in winter the radiation drops to a half. Therefore, it is necessary to enlarge lighting area or improve focusing for certain radiation power. Among present solar water heaters, flat solar heater is most popular, but is expensive to be widely laid; and concentrating water heater is not applicable either as it features complex structure and high price.

In China, large areas are hot in summer and cold in winter, and the heat energy and cold energy thereof are not fully utilized. Especially in Yangtze River Basin, water in the rivers and lakes could be used to store energy seasonally for heating and cooling, thus electric load is reduced and the environment is protected.

### SUMMARY OF THE INVENTION

In view of the above-described problems, it is one objective of the invention to provide a double-layer salt-free seasonal heat-cold energy storage and supply pool. The solar pond is adapted to utilize water in the rivers and lakes to store energy seasonally for heating and cooling in areas which are hot in summer and cold in winter, so as to save energy and protect environment.

To achieve the above objective, in accordance with one embodiment of the invention, there is provided a double-layer salt-free seasonal heat-cold energy storage and supply pool, comprising a salt-free solar pond at an upper layer and an energy storage pond. The salt-free solar pond and the energy storage pond are separately connected to a water source. The salt-free solar pond comprises a pond bottom and a pond wall. The pond bottom of the salt-free solar pond is a top cover of the energy storage pond. A wall and a bottom of the energy storage pond are composite layers. The energy storage pond is provided with a heat exchange coil to implement heat exchange in the energy storage pond for heating and cooling of an external user. The salt-free solar pond and the energy storage pond are communicated through a valve of the pond bottom of the salt-free solar pond in a controllable manner.

In a class of this embodiment, the pond bottom and the pond wall are made from steel frame and polyurethane insulation coating sandwiched with double-layer steel plate.

In a class of this embodiment, the salt-free solar pond is provided with a transparent top cover.

In a class of this embodiment, the top cover is an inflated polyethylene bag.

In a class of this embodiment, a pond depth of the salt-free solar pond is between 300 mm and 500 mm, and a waterlogging depth is between 200 mm and 400 mm.

In a class of this embodiment, the composite layers of the energy storage layer are composed by waterproof layer, supporting layer, and insulation layer in sequence.

In a class of this embodiment, outer surfaces of the pond bottom and the pond wall of the salt-free solar pond are coated with solar-energy absorbing coating made from silica sol, or cheaper solar-energy absorbing coating which has similar performance with the coating made from silica sol.

In a class of this embodiment, a flashboard is disposed on an edge of the pond bottom of the salt-free solar pond. A chute is disposed on an edge of the wall of the energy storage pond. The flashboard and the chute are connected and fixed, and are covered by a sealing cap. The salt-free solar pond was supported by buoyant force of water in the energy storage pond.

It is another objective of the invention to provide a seasonal energy storage system capable of heating and cooling using the double-layer salt-free seasonal heat-cold energy storage and supply pool, comprising at least two double-layer salt-free seasonal heat-cold energy storage and supply pool and a heat pump. When at least one double-layer salt-free seasonal heat-cold energy storage and supply pool is used for cooling, at least one salt-free solar pond is used for heating, and vice versa. One end of the heat pump is connected to a circulation line in which a heat exchange coil of each energy storage pond is located, and another end is connected to an external user. A plurality of water pumps and valves are disposed in a system line and separately used to provide power and working conditions of a control system to a medium in the line.

Advantages according to embodiments of the invention are summarized as follows:
1) the salt-free solar pond is used as a substitute for conventional solar panels, and water zones can be used to dispose the salt-free solar pond, so as to avoid high cost and large land occupation of conventional solar panels;
2) the salt-free solar pond has a higher solar collecting efficiency. The salt-free solar pond features a shallow pond structure, and shallow pond absorbs heat fast with a high solar collecting efficiency generally being more than 50%, so when normal water temperature on the lake surface in summer at areas which are hot in summer and cold in winter is between 30°C and 35°C, the water temperature in the shallow pond at noon (having the strongest solar radiation) is heated to more than 50°C, thus the solar collecting capacity is effectively improved;
3) the salt-free solar pond features dual function of heat and cold collecting and storage. Lines and apparatus comprising the heat pump and the water pump in cooperation with the salt-free solar pond constitute the seasonal energy storage system for seasonally heating and cooling of the external user, thus energy is saved and environment is protected;
4) the salt-free solar pond features novel structure and low cost. The salt-free solar pond on the upper layer is supported by the buoyant force of water in the energy storage pond on the lower layer, thus no extra supporting structure is needed, thereby saving costs and construction. Energy storage pond could be constructed in a way of simple reservoir at areas having good hydrogeology conditions, costing less than a reinforced concrete structure;
5) the salt-free solar pond is environmental-friendly. Unlike common solar pond containing salt, the salt-free solar pond is pollution-free and non-corrosive.

### BRIEF DESCRIPTION OF THE DRAWINGS

FIG. **1** is a schematic diagram of a double-layer salt-free seasonal heat-cold energy storage and supply pool in accordance with one embodiment of the invention;
FIG. **2** is a schematic diagram of an assembling of a salt-free solar pond and an energy storage pond in accordance with one embodiment of the invention; and
FIG. **3** is a schematic diagram of a seasonal energy storage system capable of heating and cooling using a double-layer salt-free seasonal heat-cold energy storage and supply pool in accordance with one embodiment of the invention.

In the figures, the following reference numbers are used: **1**. salt-free solar pond (wherein, **1.1** pond bottom; **1.2** pond wall; **1.3** top cover; **1.4** flashboard; **1-I** salt-free solar cold-collecting pond; **1-11** salt-free solar heat-collecting pond); **2.** energy storage pond (wherein **2.1** composite layer; **2.2** heat exchange coil; **2.3** water return pipe; **2.4** water supply pipe; **2.5** chute; **2.6** sealing cap; **2-I** cold storage pond; **2-II** heat storage pond); **3.1-3.5** water pumps; **4.1-4.13** valves; **5.** heat pump (wherein, **5.1** evaporator; **5.2** condenser; **5.3** reversing valve); **6**. user.

### DETAILED DESCRIPTION OF THE EMBODIMENTS

For further illustrating the invention, experiments detailing a double-layer salt-free seasonal heat-cold energy storage and supply pool, a seasonal energy storage system capable of heating and cooling using the same, and an usage thereof are described below. It should be noted that the following examples are intended to describe and not to limit the invention.

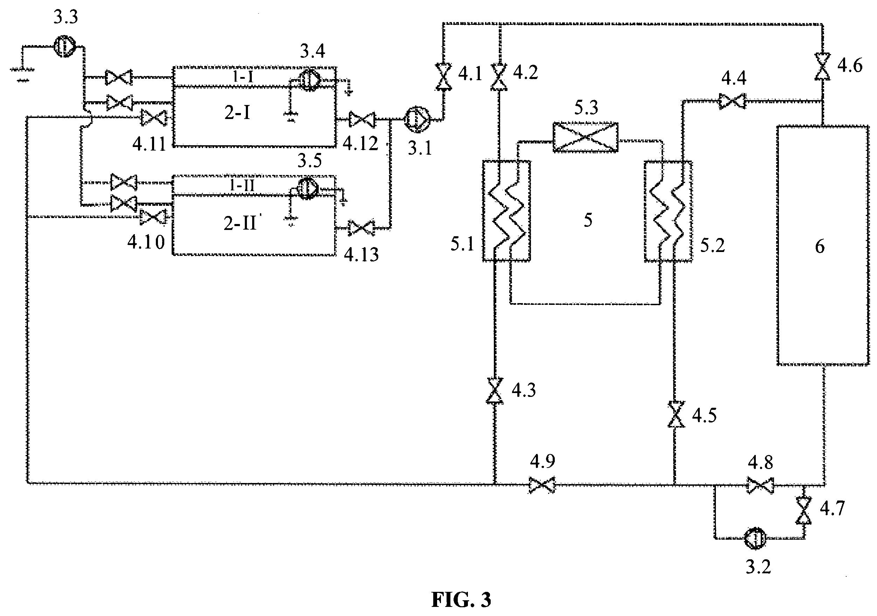

The seasonal energy storage system capable of heating and cooling, comprising at least two double-layer salt-free seasonal heat-cold energy storage and supply pool and a heat pump. In the example, when at least one double-layer salt-free seasonal heat-cold energy storage and supply pool was used for cooling, at least one salt-free solar pond was used for heating, and vice versa. As shown in FIG. **3**, the double-layer salt-free seasonal heat-cold energy storage and supply pool, comprising a salt-free solar pond **1** at an upper layer and an energy storage pond **2** on the lower layer. The salt-free solar pond **1** was adapted to collect heat or cold, and the energy storage pond **2** was adapted to store heat or cold. The salt-free solar pond **1** was supported by buoyant force of water in the energy storage pond **2**. The salt-free solar pond **1** and the energy storage pond **2** were separately connected to a water source.

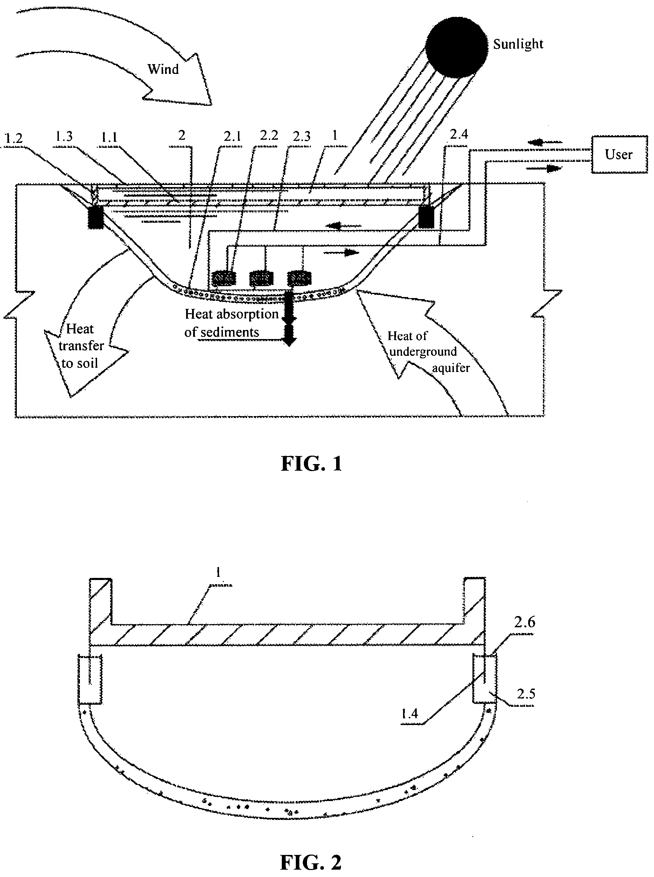

As shown in FIGS. **1-2**, the salt-free solar pond **1** comprised a pond bottom **1.1**, a pond wall **1.2**, and a transparent top cover **1.3**. The pond bottom **1.1** and the pond wall **1.2** were made from steel frame and polyurethane insulation coating sandwiched with double-layer steel plate. Inner surfaces and outer surfaces of the pond bottom **1.1** and the pond wall **1.2** were coated with anti-corrosion coating, and outside of the anti-corrosion coating, the surfaces were coated with solar-energy absorbing coating as an endothermic layer, such as solar-energy absorbing coating made from silica sol. A pond depth of the salt-free solar pond was 500 mm, and a waterlogging depth was 300 mm. The pond top cover **1.3** was an inflated polyethylene bag, and a thin one was employed in the example so that sunlight could easily penetrate into the pond, and that heat was well-preserved. The top cover **1.3** was optional in winter. The pond bottom **1.1** of the salt-free solar pond **1** was a top cover of the energy storage pond **2**. A wall and a bottom of the energy storage pond **2** were composite layers **2.1** which were composed by waterproof layer, supporting layer, and insulation layer in sequence, so that heat transfer between water and soil, heat absorption of sediments on the bottom, and heat exchange between underground aquifer and water in the energy storage pond **2** were avoided, bringing good insulation property and energy storage performance to the energy storage pond **2**. The energy storage pond 2 was provided with a heat exchange coil **2.2**, which connected to an external heat consuming equipment via a water supply pipe **2.4** and a water return pipe **2.3** and formed a circulation line to implement heat exchange in the energy storage pond **2** for heating and cooling of an external user **6**. The salt-free solar pond **1** and the energy storage pond **2** were communicated through a valve of the pond bottom **1.1** of the salt-free solar pond **1** in a controllable manner. In addition, in the example, the salt-free solar pond **1** was supported by buoyant force of water in the energy storage pond **2**, thus no extra supporting structure was needed. For the convenience of positioning and free lifting in accordance with water level in the energy storage pond **2** of the salt-free solar pond **1**, a flashboard **1.4** was disposed on an edge of the pond bottom of the salt-free solar pond **1**. A chute **2.5** was disposed on an edge of the wall of the energy storage pond **2**. The flashboard **1.4** and the chute **2.5** were connected and fixed, and were sealed by a sealing cap **2.6**.

The example was provided with two energy storage ponds **2**. One was for cold storage and was named cold storage pond **2-I**, and another was for heat storage and was named heat storage pond **2-I**I**.** The corresponding salt-free solar ponds 1 were named salt-free solar cold-collecting pond **1-I** and salt-free solar heat-collecting pond **1-II**, respectively. The heat exchange coils **2.2** in the cold storage pond **2-I** and the heat storage pond **2-II** were connected to the user **6** via pipes, respectively. In addition, one end of the heat pump **5** was respectively connected to circulation lines in which the heat exchange coils **2.2** of the cold storage pond **2-I** and the heat storage pond **2-II** were located, and another end was connected to the external user **6**. A plurality of water pumps **3.1-3.5** and valves **4.1-4.13** were disposed in a system line and separately used to provide power and working conditions of a control system to a medium in the line. The heat pump **5** was adapted to be a supplement for insufficient heating and cooling of the double-layer salt-free seasonal heat-cold energy storage and supply pool, so that a too large volume of the energy storage pond **2** was avoided. An energy supply ratio between the double-layer salt-free solar pond and the heat pump **5** was determined by areas where the system project was located and actual situations.

A working principle of the seasonal energy storage system capable of heating and cooling using the double-layer salt-free seasonal heat-cold energy storage and supply pool is illustrated as follows according to working conditions in summer and winter of an area:
1) Cooling: in winter, 1-3°C lake water was pumped into the salt-free solar cold-collecting pond **1-I** via the water pump **3.3** until a rated flow of the pond was reached, then the valve on the pond bottom **1.1** of the salt-free solar cold-collecting pond was opened to store the cold water into the bottom of the cold storage pond **2-I**; meanwhile, the water pump **3.4** was opened to pump seasonal waste water out from the upper part of the cold storage pond **2-I** to realize water exchange of the cold storage pond **2-I.** The above process was repeated until the stored water in the cold storage pond **2-I** was totally exchanged. In summer, the water pump 3.1 and the valves **4.1, 4.6, 4.8, 4.9, 4.11**, and **4.12** were opened, and the valves **4.2, 4.3, 4.4, 4.5, 4.7, 4.10** and **4.13** were closed for cooling. Because a cold water circulation pipe of the user **6** was connected to a heat exchanger of cold storage pond **2-I,** a full heat exchange between the circulation water in the heat exchange coil **2.2** of the cold storage pond **2-I** and the cold water stored in the cold storage pond **2-I** was implemented. The circulation water was cooled, and sent for cooling of the user **6**, then the circulation water was back to the cold storage pond **2-I.** The above process was repeated to guarantee the cooling of the user **6**. When the water temperature in the cold storage pond **2-I** was above 18°C and could not meet the cooling requirement of the user **6**, the heat pump **5** was started. At the same time, the water pump **3.1** and the valves **4.1, 4.2, 4.3, 4.11**, and **4.12** were opened; the water pump **3.2** and the valves **4.4, 4.5, 4.6**, and **4.7** were opened; and the valves **4.8,4.9, 4.10**, and **4.13** were closed;
2) heating: in summer, water was pumped into the salt-free solar heat-collecting pond **1-II** via the water pump **3.3** until a rated flow of the pond was reach, and until the water was heated to above 70°C, then the valve on the pond bottom **1.1** of the salt-free solar heat-collecting pond was opened to store the hot water into the heat storage pond **2-II;** meanwhile, the water pump **3.5** was opened to pump seasonal waste water out from the upper part of the heat storage pond **2-II** to realize water exchange of the heat storage pond **2-II**. The above process was repeated until the stored water in the heat storage pond **2-II** was totally exchanged. In winter, the water pump **3.1** and the valves **4.1, 4.6, 4.8, 4.9, 4.10**, and **4.13** were opened, and the valves **4.2, 4.3, 4.4, 4.5, 4.7, 4.11** and **4.12** were closed for heating. Because a hot water circulation pipe of the user 6 was connected to the heat exchanger of heat storage pond **2-II**, a full heat exchange between the circulation water in the heat exchange coil **2.2** of the heat storage pond **2-II** and the hot water stored in the heat storage pond **2-II** was implemented. The circulation water was heated, and sent for heating of the user **6**, then the circulation water was back to the heat storage pond **2-II**. The above process was repeated to guarantee the heating of the user **6**. When the water temperature in the heat storage pond **2-II** was below 40°C and could not meet the heating requirement of the user 6, the heat pump **5** was started. At the same time, the water pump **3.1** and the valves **4.1, 4.2, 4.3, 4.4, 4.5, 4.10**, and **4.13** were opened; the water pump **3.2** and the valve 4.7 were opened; and the valves **4.6, 4.8,4.9, 4.11**, and **4.12** were closed;

When the number of the double-layer salt-free seasonal heat-cold energy storage and supply pool is more than 2, the connections and the working principles are the same as above.

The double-layer salt-free seasonal heat-cold energy storage and supply pool features a novel and simple structure, making the most of natural energy sources such as water in the lakes and rivers of areas which are hot in summer and cold in winter, so as to realize seasonal energy storage, and heating and cooling, thus energy is saved and environment is protected. While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention. For example, other regular insulation material can be used as a substitute for the polyurethane insulation coating sandwiched with double-layer steel plate which features high intensity and good thermal insulation property; other transparent insulation structures can be used as a substitute for the inflated polyethylene bag in the example, and the top cover **1.3** is optional according to the local climate; and the composite layer **2.1** is not limited to be similar to a simple reservoir which is easy to construct.

## Claims

1. A double-layer salt-free seasonal heat-cold energy storage and supply pool, comprising a salt-free solar pond (1) at an upper layer and an energy storage pond (2) on the lower layer; the salt-free solar pond (1) and the energy storage pond (2) are separately connected to a water source; the salt-free solar pond (1) comprises a pond bottom (1.1) and a pond wall (1.2); the pond bottom (1.1) of the salt-free solar pond (1) is a top cover of the energy storage pond (2); a wall and a bottom of the energy storage pond (2) are composite layers (2.1); the energy storage pond (2) is provided with a heat exchange coil (2.2) to implement heat exchange in the energy storage pond (2) for heating and cooling of an external user (6); the salt-free solar pond (1) and the energy storage pond (2) are communicated through a valve of the pond bottom (1.1) of the salt-free solar pond (1) in a controllable manner.

2. The pool of claim 1, wherein the pond bottom (1.1) and the pond wall (1.2) are made from steel frame and polyurethane insulation coating sandwiched with double-layer steel plate.

3. The pool of claim 1 or 2, wherein the salt-free solar pond (1) is provided with a transparent top cover (1.3).

4. The pool of claim 3, wherein the top cover (1.3) is an inflated polyethylene bag.

5. The pool of claim 1, 2, or 4, wherein a pond depth of the salt-free solar pond (1) is between 300 mm and 500 mm, and a waterlogging depth of the salt-free solar pond (1) is between 200 mm and 400 mm.

6. The pool of claim 3, wherein a pond depth of the salt-free solar pond (1) is between 300 mm and 500 mm, and a waterlogging depth of the salt-free solar pond (1) is between 200 mm and 400 mm.

7. The pool of claim 1, 2, or 4, wherein the composite layers (2.1) of the energy storage layer (2) are composed by waterproof layer, supporting layer, and insulation layer in sequence.

8. The pool of claim 3, wherein the composite layers (2.1) of the energy storage layer (2) are composed by waterproof layer, supporting layer, and insulation layer in sequence.

9. The pool of claim 5, wherein the composite layers (2.1) of the energy storage layer (2) are composed by waterproof layer, supporting layer, and insulation layer in sequence.

10. The pool of claim 1 or 2, wherein outer surfaces of the pond bottom (1.1) and the pond wall (1.2) are coated with solar-energy absorbing coating.

11. The pool of claim 1 or 2, wherein a flashboard (1.4) is disposed on an edge of the pond bottom of the salt-free solar pond (1); a chute (2.5) is disposed on an edge of the wall of the energy storage pond (2); the flashboard (1.4) and the chute (2.5) are connected and fixed, and are sealed by a sealing cap (2.6); the salt-free solar pond (1) was supported by buoyant force of water in the energy storage pond (2).

12. A seasonal energy storage system capable of heating and cooling, comprising at least two seasonal heat-cold energy storage and supply pools of claim 1 and a heat pump (5), wherein at least one double-layer salt-free seasonal heat-cold energy storage and supply pool is used for cooling, at least one salt-free solar pond is used for heating; one end of the heat pump (5) is connected to a circulation line in which a heat exchange coil (2.2) of each energy storage pond (2) is located, and another end is connected to an external user (6); a plurality of water pumps (3.1-3.5) and valves (4.1-4.13) are disposed in pipelines of the system to provide power for working medium and control working conditions of the system.
